# EUROPEAN PATENT APPLICATION

(11) **EP 3 563 995 A1**
(43) Date of publication of application: **06.11.2019**
(21) Application number: 19170920.3
(22) Date of filing: 24.04.2019
(51) Int. Cl.: B26B 19/24, B26B 19/28, B26B 19/38

(54) **IMPROVEMENT IN OR RELATING TO CLIPPERS**

(30) Priority: 30.04.2018 GB 201807006
(71) Applicant: Lister Shearing Equipment Limited, Stonehouse, Gloucestershire GL10 3SX (GB)
(72) Inventor: Howell, Robin, Stonehouse, Gloucestershire GL10 3SX (GB); Pyrah, David, Stroudwater, Gloucestershire GL10 3SX (GB)
(74) Representative: Gray, James

(57) **Abstract**

An electrically operable clipper (10) having a body portion (12) and a head portion (14), wherein the head portion (14) includes a movable cutter (20) and a fixed comb (18). The clipper (10) includes an internally located electric motor (36) operable to move the movable cutter (20). The electric motor (36) is provided with a first and second air moving means (38, 40) operable to move air over and through the electric motor (36), in use.

## Description

The present invention relates to an electrically operable clipper and more particularly to an electrically operable animal hair clipper.

Electrically operable clippers may be used to cut hair from the coats of animals. Such clippers typically have a handle by which a user is able to grip the clipper, a fixed comb and a movable clipper blade. The clipper blade is movable across the comb in a reciprocating manner by an electric motor provided within the handle. A transmission arrangement is provided between the output shaft of the motor and the clipper blade in order to convert the rotary motion of the output shaft to the aforementioned reciprocating motion of the clipper blade.

CN 207548816 U discloses an electric clipper having internal fan blades which are configured to blow air over the comb and clipper blade of the clipper. The purpose of the fans provided in CN 207548816 is to provide an airflow over the comb and clipper blade for the purpose of preventing a build-up of clipped hair fragments on and around the comb and clipper blade.

According to the present invention there is provided an electrically operable clipper having a body portion and a head portion, wherein the head portion includes a movable cutter and a fixed comb, the clipper including an internally located electric motor operable to move the movable cutter, wherein the electric motor is provided with a first and second air moving means operable to move air over and through the electric motor in use, wherein the first air moving means is operable to draw air into the interior of body portion though at least one inlet aperture of the body portion and the second air moving means is operable to move air from the interior of the body portion to the exterior of the body portion through at least one outlet aperture of the body portion or the head portion.

The movement of air over and through the electric motor serves to both cool the electric motor and to prevent heating of the body portion of the clipper which, in use, is gripped by a user of the clipper.

In an embodiment of electrically operable clipper the first and second air moving means comprise a first fan member having a plurality of fan blades and a second fan member having a plurality of fan blades.

The first fan member may be provided at a first end of the electric motor, and the second fan member may be provided at a second end of the electric motor. The first and second fan members may connected to a rotatable shaft of the electric motor. More specifically, the first and second fan members may be connected to a common shaft of the electric motor.

The first and second fan members are connected to a shaft or shafts of the electric motor such that operation of the electric motor results in rotation of the fan members. The movement of air over and through the electric motor thus occurs during each and every operation of the electric motor.

The first fan member may be an axial flow fan member. The first fan member is thus arranged to draw air into the body portion and to push air over and through the electric motor.

The first fan member may be located within the body portion of the clipper at a position distal to the head portion.

The second fan member may a radial flow fan member. The second fan member is thus arranged to draw air over and through the electric motor and push air out of the interior space of the clipper. The second fan member is thus operable to move air from the interior of the body portion to the exterior of the body portion.

The second fan member may be located within the head portion of the clipper.

The or each aperture may be provided at the interface of the body portion to the head portion.

In another embodiment of the invention the second fan member may operable to move air to the exterior of the body portion through at least one outlet aperture of the body portion and at least one outlet aperture of the head portion.

The at least one outlet aperture of the head portion may be provided on a lower side or underside of the head portion. The at least one inlet aperture may provided on an upper side of the body portion at a location that is distal to the head portion. In an alternative embodiment, the at least one inlet aperture may be provided on a lower side of the body portion at a location that is distal to the head portion.

The least one outlet aperture of the body portion may be provided on a lower side of the body portion at a location that is proximal to the head portion. The at least one inlet aperture may include a filter. The at least one outlet aperture may be located radially with respect to the second air moving means.

An embodiment of the present invention will now be described with reference to the accompanying drawings in which:
Figure 1 shows a perspective view of a clipper in accordance with the present invention;
Figure 2 shows a side view of the clipper;
Figure 3 shows a bottom plan view of the clipper;
Figure 4 shows a top plan view of the clipper;
Figure 5 shows a partially cutaway side view of the clipper;
Figure 6 shows a perspective view of a motor of the clipper;
Figure 7 shows a bottom plan view of the interior of a portion of the handle of the clipper;
Figure 8 shows a sectional view indicated by arrows A-A on figure 7;
Figures 9 to 14 show bottom plan views of the interaction of switch detent mechanism of the clipper;
Figure 15 shows a bottom plan view of a switch slider of the clipper;
Figure 16 shows the cross-sectional view indicated by arrows B-B on figure 15; and
Figure 17 shows a perspective view of the switch slider.

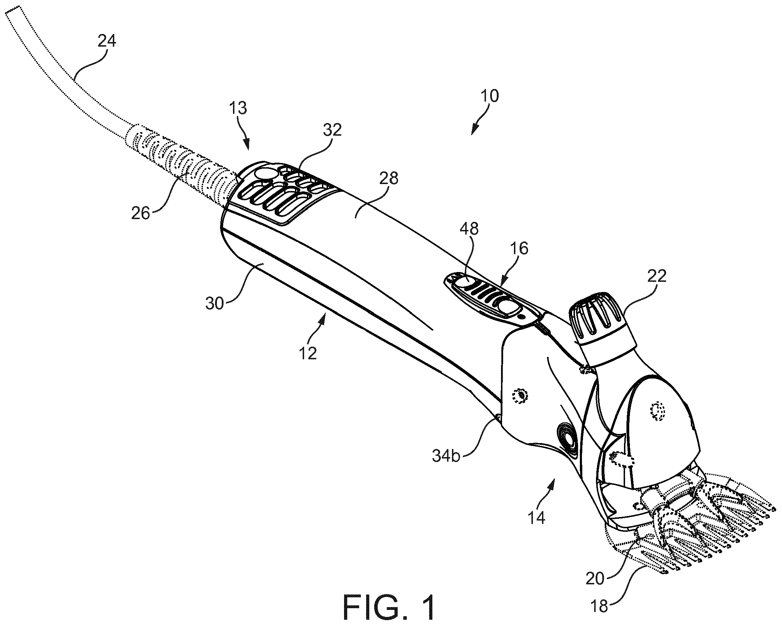

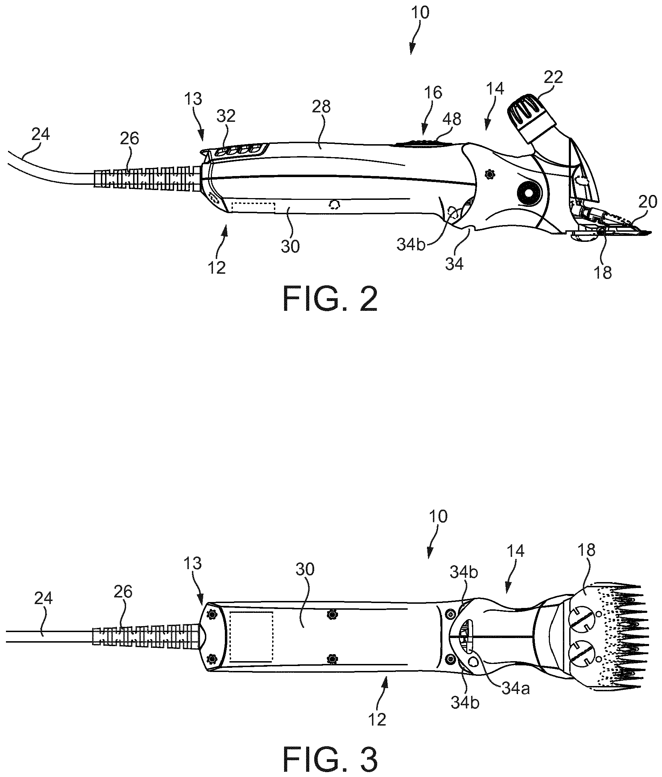

Referring firstly to figures 1 to 4, there is shown a handheld clipper generally designated 10. The clipper 10 is configured for the cutting of the hair of animals, for example bovine and ovine hair.

The clipper 10 comprises a body portion 12 and head portion 14. The body portion 12 is intended to be gripped by the hand of a user of the clipper 10 and is provided with a slidable switch 16. The switch 16 is positioned and configured such that it can be manipulated by the thumb of a user while gripping the clipper 10 in one hand.

The head portion 14 of the clipper 10 includes a fixed comb 18 and a movable cutter 20. The cutter 20 is movable in an arc across the comb 18 in a reciprocating manner by a drive mechanism of the clipper 10. The head portion 14 further includes a tension nut 22 which can be manipulated by a user of the clipper 10 to vary the contact pressure between the cutter 20 and the comb 18. In an alternative embodiment, not shown, the cutter 20 may be configured to move linearly over the comb 18 in a side to side reciprocating manner.

The clipper 10 is electrically powered and is provided with a power cable 24 which extends from an end of the body portion 12 which is distal to the head portion 14, hereinafter referred to as the distal end 13 of the body portion 12. A cable support 26 which prevents kinking of the cable 24 is provided at the location where the cable 24 enters the body portion.

The body portion 12 of the clipper 10 includes upper and lower casing halves 28, 30 which are, in use, connected to one another. The casing halves 28,30 may be formed from plastic, for example by injection moulding. The upper casing half 28 includes the slidable switch 16 and a plurality of inlet apertures 32. The inlet apertures 32 are provided at the end of the upper casing half 28 which is distal to the head portion 14. It will thus be understood that the inlet apertures 32 are provided on the upper side of the clipper 10. In the embodiment shown the upper casing half 28 is provided with eight inlet apertures 32. It will be appreciated that a greater or lesser number of inlet apertures 32 may be provided. Although not shown, the inlet apertures 32 are covered by a mesh panel or filter located to the interior of the body portion 12 which acts to prevent the ingress of dust and debris such as animal hair clippings. In an alternative embodiment (not shown) the inlet apertures 32 may be provided at the end of the lower casing half 30 which is distal to the head portion 14. In such an embodiment it will be understood that the inlet apertures 32 would be provided on the lower side or underside of the clipper 10.

The head portion 14 is further provided with outlet apertures 34a,34b. A first outlet aperture 34a is provided to the lower side or underside of the clipper 10, which is to say the side of the clipper 10 opposite to that which has the inlet apertures 32. In the embodiment shown the outlet aperture 34a is semi-circular. It will be understood that the outlet aperture 34a may have alternative shapes. Two smaller outlet apertures 34b are provided on opposing lateral sides of the lower casing half 30 of the clipper 10 at the interface of the body portion 12 to the head portion 14. It will be understood that alternative locations for the outlet apertures 34a, 34b may be provided. For example, all of the outlet apertures 34a, 34b may be located on the body portion 12 or the head portion 14 of the clipper 10.

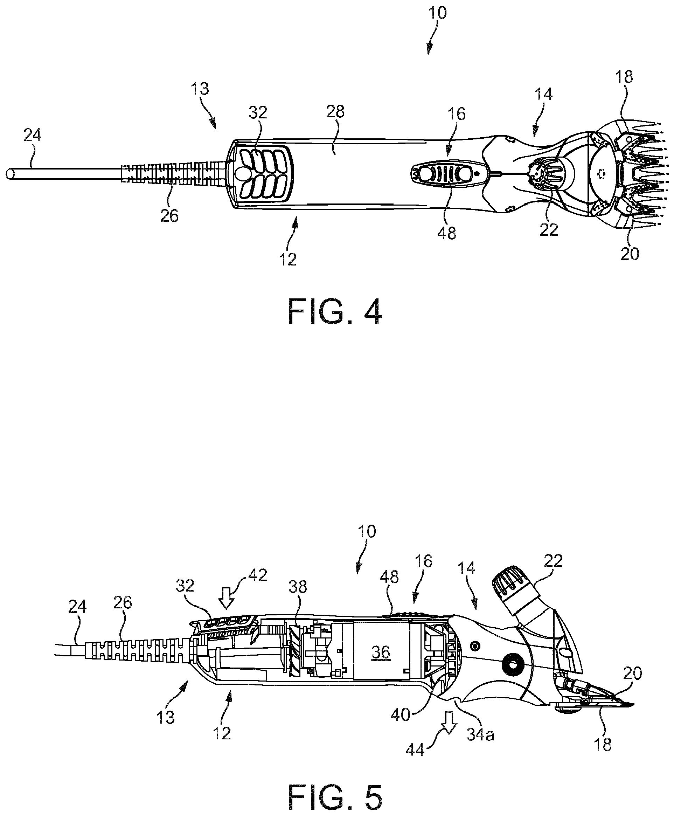

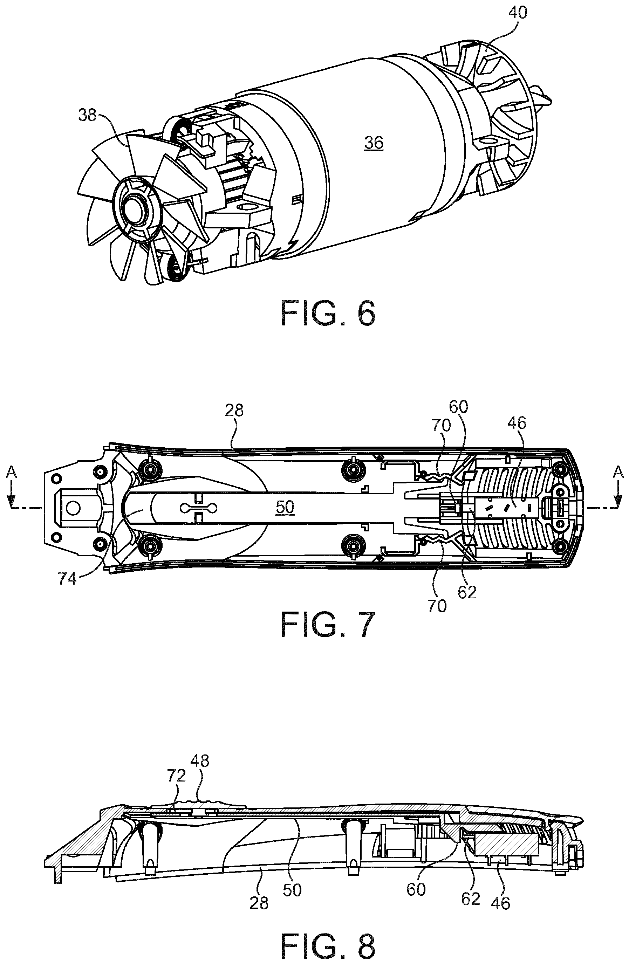

Referring now to figures 5 and 6, the internal configuration of the body portion 12 of the clipper 10 may be seen. The body portion 12 includes a longitudinally aligned electric motor 36. The electric motor 36 includes an output shaft (not shown) which extends into the head portion 14 and, in use, operates the aforementioned drive mechanism to move the cutter 20 across the comb 18.

The motor 36 is provided at opposite ends with a fan member 38,40. Each fan member 38,40 is connected to a shaft of the electric motor such that each fan member 38, 40 is rotated when the motor 36 is operated. Each fan member 38,40 is provided with a plurality of blades.

The fan member 38 located at the end of the motor 36 which is distal to the head portion 14 (hereinafter referred to as the distal fan member 38) is configured as an axial flow fan. In use, rotation of the distal fan member 38 causes air to be drawn into the body portion 12 through the inlet apertures 32 as indicated by arrow 42. Air which has been drawn into the body portion 12 in the manner described is then urged by the distal fan member 38 over and through the electric motor 36 in the direction of the head portion 14. In the embodiment shown, the distal fan member 38 is offset longitudinally within the body portion 12 with respect to the inlet apertures 32.

The fan member 40 located at the end of the motor 36 which is proximal to the head portion 14 (hereinafter referred to as the proximal fan member 40) is configured as a radial flow fan. In use, rotation of the proximal fan member 40 causes air to be ejected from the interior of the body portion 12 through the outlet aperture 34a provided in the head portion 14 as indicated by arrow 44. In the embodiment shown the outlet apertures 34a,34b are aligned radially with respect to the proximal fan member 40.

In use, and as noted above, operation of the electric motor 36 results in rotation of both fan members 38,40. Air is drawn into the body member 12 via the inlet apertures 32 and directed over and through the electric motor 36. Air that has passed over and through the electric motor 36 is entrained by the proximal fan member 40 and ejected from the interior of the body portion 12 through the outlet apertures 34a,34b. The flow of air into, through and out of the body portion 12 serves to cool the electric motor 36. This improves the efficiency of the motor 36 and can further increase the service life of the electric motor 36. The aforementioned flow of air further acts to prevent heating of the exterior surface of the body portion 12 which can cause discomfort to the user during extended use of the clipper 10.

The clipper 10 of the present invention thus does not direct air over and through the comb and cutter 18,20, but instead is configured to ensure that air heated by virtue of its passage over the electric motor 36 is directed away from the comb and cutter 18,20. Due to the proximal fan member 40 being configured as a radial flow fan, and the provision of the outlet apertures 34a,34b radially with respect to the proximal fan member 40, it will be understood that the heated air is ejected in a direction that is radially outward and substantially perpendicular to the longitudinal centreline axis of the clipper 10. The heated are is also directed away from the user of the clipper 10.

As noted above, the clipper 10 is provided with a slidable switch 16. The slidable switch 16 is operable to activate and deactivate the electric motor 36. The switch is movable in a longitudinal direction between an off position, a first operating position and a second operating position. The first and second operating positions correspond to first and second operating speeds of the electric motor, where the second operating speed is greater than the first operating speed. As will be described in greater detail below, the switch 36 is also longitudinally movable to a reset position where an internal reset module 46 of the clipper 10 is operated. The reset module 46 is provided to re-enable operation of the motor 36 after a motor cut-out event has occurred. The clipper 10 is provided with a motor cut-out mechanism to prevent damage to the motor 36 by, for example, a power surge, overheating, jamming of the comb 18 and cutter 20 or other such event outside of the normal operating parameters of the clipper 10.

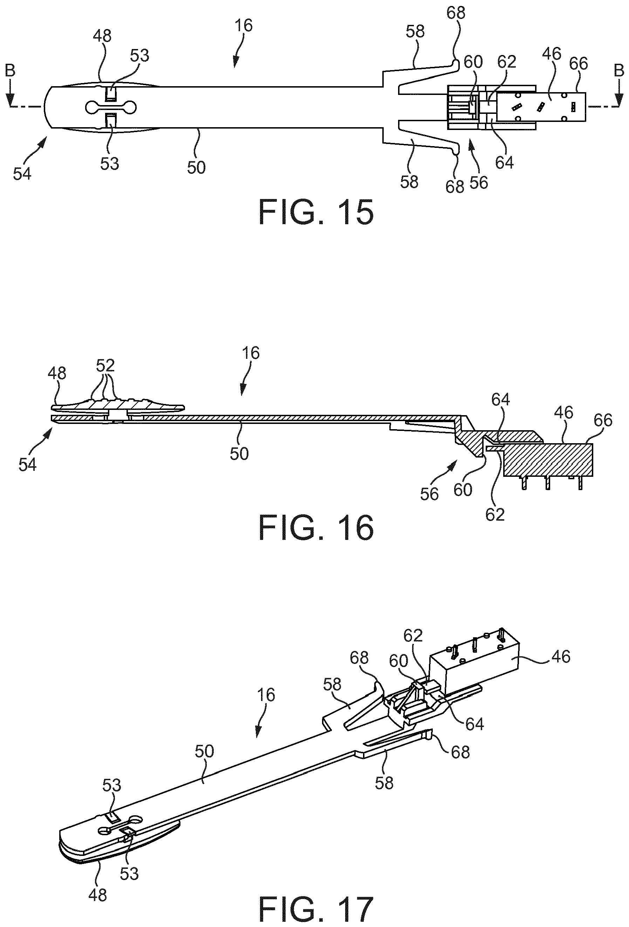

Figures 7 to 17 illustrate the configuration of the slidable switch 16 and reset module 46. Looking firstly at figures 15 to 17, the switch 16 includes an external member 48 and an internal member 50. The external member 48, as noted above, is configured such that it can be manipulated by the thumb of a user while gripping the clipper 10 in one hand. For this purpose, the external member 48 is provided with a plurality of ridges 52 which are arranged substantially transverse to the longitudinal form of the body portion 12. The external member 48 is formed from plastic, for example by injection moulding.

The external member 48 is provided with a connector portions 52 which connect the external member 48 to the internal member 50. In the embodiment shown, the connector portions 53 comprise arms which connect to a complementarily shaped location on the internal member 50.

The internal member 50 has a length that is greater than the length of the external member 48. The internal member 50 has a first end 54 to which the external member 48 is attached, and a second end 56 having a spaced pair of arms 58 and an abutment surface 60 positioned between the arms 58. The abutment surface 60, in use, is configured to abut an actuation member 62 of a reset module 46 as will be described in greater detail below. The internal member 50 is further provided with a guide surface 64 which, in use, lies against a surface 66 of the reset module 46.

The internal member 50 is formed from plastic, for example by injection moulding. The arms 58 of the internal member 50 are provided with rounded ends 68 which, in use, interact with opposed ramp formations 70 of the upper casing half 28 to provide a detent mechanism of the switch 16.

Referring now to figures 7 and 8 the arrangement of the switch 16, upper casing half 28 and reset module 46 is shown. The external member 48 of the switch 16 is connected to the internal member 50 through a slot 72 of the upper casing half 28, and the first end 54 of the internal member 50 is received in a longitudinal guideway 74 of the upper casing half 28. The internal member 50 extends along the inner surface of the upper casing half 28 in the direction of the inlet apertures 32 thereof. The opposed ramp formations 70 of the upper casing half 28 are provided on the inner surface of the upper casing half adjacent the inlet apertures 32. The reset module 46 is located below the inlet apertures 32. The ramp formations 70 each comprise a plurality of inclined surfaces which define an alternating series of peaks and troughs.

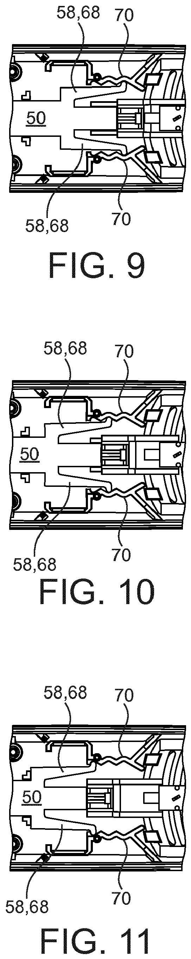

The opposed ramp formations 70 and arms 58 of internal member 50 define the off position of the switch 16 (figure 9), the first operating position of the switch 16 (figure 10) and the second operating position of the switch 16 (figure 11). These positions of the switch 16 are defined by opposing troughs of the ramp portions 70 into which the rounded ends 68 of the arms 58 are urged by the inherent resilience of the arms 58. Movement of the switch 16 between the off position and the first operating position, and the first operating position and the second operating position, causes the arms 58 to be deflected towards one another by opposed peaks of the ramp formations 70.

In each of the off, first and second operating positions of the switch 16 the abutment surface 60 of the internal member 50 is spaced from the actuation member 62 of the reset module 46. In the event that a reset operation is required, the user is required to move the switch 16 to a reset position such that the abutment surface 60 contacts and thereafter moves the actuation member 62 of the reset module 46. So as to prevent inadvertent operation the reset module 46, the reset position of the switch 16 is in the opposite direction from the off position to the first and second operating positions.

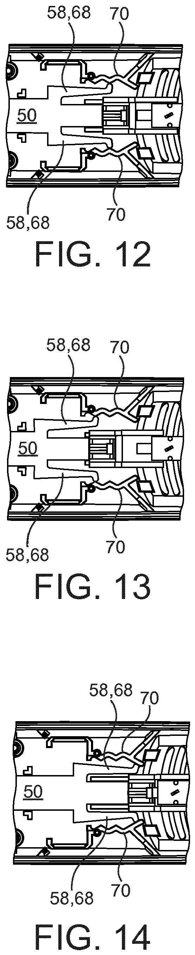

The detent mechanism of the switch 16 is configured such that the switch 16 is biased towards the off position from the reset position. Figure 14 shows the position of the internal member 50 in the reset position. The abutment surface 60 is shown contacting the actuation member 62 of the reset module 46, while the arms 58 are shown compressed by the opposed ramp formations 70. Compression of the arms 58 in this manner provides a restorative force which moves the switch 16 to the off position once the user releases the switch 16.

## Claims

1. An electrically operable clipper having a body portion and a head portion, wherein the head portion includes a movable cutter and a fixed comb, the clipper including an internally located electric motor operable to move the movable cutter, wherein the electric motor is provided with a first and second air moving means operable to move air over and through the electric motor in use, wherein the first air moving means is operable to draw air into the interior of body portion though at least one inlet aperture of the body portion and the second air moving means is operable to move air from the interior of the body portion to the exterior of the body portion through at least one outlet aperture of the body portion or the head portion.

2. An electrically operable clipper as claimed in claim 1 wherein the first and second air moving means comprise a first fan member having a plurality of fan blades and a second fan member having a plurality of fan blades.

3. An electrically operable clipper as claimed in claim 2 wherein the first fan member is provided at a first end of the electric motor, and the second fan member is provided at a second end of the electric motor.

4. An electrically operable clipper as claimed in claim 3 wherein first and second fan members are connected to a rotatable shaft of the electric motor.

5. An electrically operable clipper as claimed in claim 4 wherein the first and second fan members are connected to a common shaft of the electric motor.

6. An electrically operable clipper as claimed in any of claims 2 to 5 wherein the first fan member is an axial flow fan member.

7. An electrically operable clipper as claimed in claim 6 wherein the first fan member is located within the body portion of the clipper at a position distal to the head portion.

8. An electrically operable clipper as claimed in any of claims 2 to 5 wherein the second fan member is a radial flow fan member.

9. An electrically operable clipper as claimed in claim 8 wherein the second fan member is located within the head portion of the clipper.

10. An electrically operable clipper as claimed in any preceding claim wherein the second fan member is operable to move air to the exterior of the body portion through at least one outlet aperture of the body portion and at least one outlet aperture of the head portion.

11. An electrically operable clipper as claimed in any preceding claim wherein the at least one outlet aperture of the head portion is provided on a lower side or underside of the head portion

12. An electrically operable clipper as claimed in any preceding claim wherein the at least one inlet aperture is provided on an upper side of the body portion at a location that is distal to the head portion.

13. An electrically operable clipper as claimed in any of claims 1 to 11 wherein the at least one inlet aperture is provided on a lower side of the body portion at a location that is distal to the head portion.

14. An electrically operable clipper as claimed in any preceding claim wherein the at least one outlet aperture of the body portion is provided on a lower side of the body portion at a location that is proximal to the head portion.

15. An electrically operable clipper as claimed in any preceding claim wherein the at least one inlet aperture includes a filter.

16. An electrically operable clipper as claimed in any preceding claim wherein the at least one outlet aperture is located radially with respect to the second air moving means.
